# EUROPEAN PATENT APPLICATION

(11) **EP 1 150 464 A2**
(43) Date of publication of application: **31.10.2001**
(21) Application number: 01200287.9
(22) Date of filing: 29.01.2001
(51) Int. Cl.: H04L 12/58

(54) **Method and means for sending e-mail**

(30) Priority: 25.02.2000 BE 20000155
(71) Applicant: 9 Yards N.V., 2100 Deurne (BE)
(72) Inventor: Vermeulen, Peter Leon Johan, 2950 Kapellen (BE); Baker, Ernie Frederik Adeline J., 9300 Aalst (BE); De Coster, Jan, 2800 Mechelen (BE)
(74) Representative: Donné, Eddy

(57) **Abstract**

Method for sending information via e-mail, consisting of a message and one or several attachments, whereby the attachments are subdivided such that they consist of a presentation package on the one hand and of a data file on the other hand, whereby the presentation package is automatically installed when being opened, such that the data file can be consulted as a flyer containing information.

## Description

The present invention concerns a method, as well as a means, for sending information via e-mail.

It is known that information can be sent by making use of e-mail. A message in the form of a text is hereby sent from one computer to another one via a network.

It is also known that what is called an attachment can be coupled to the message of an e-mail, which contains further information as a sort of enclosure. Such an attachment consists for example of a text, edited with a specific word processor.

The invention aims a new method, as well as a means for sending information via e-mail, which creates new possibilities for the use of e-mail.

To this aim, the invention in the first place concerns a method for sending information via e-mail, consisting of a message and one or several attachments, whereby the attachments are subdivided such that they consist of a presentation package on the one hand and of a data file on the other hand, whereby the presentation package is automatically installed when being opened, such that the data file can be consulted as a flyer containing information.

Use is hereby made of a small computer file which can be booted without the help of any extra software or plug-ins, and which is so small that it can be sent along with an e-mail as an attachment. This is possible with Intel-based systems as well as with Apple-based systems.

According to a particularly useful, preferred embodiment, the whole is designed such that the information which is shown in the flyer can automatically call web sites, web pages or other on-line information.

In order to call web sites, web pages or other on-line information, the information preferably contains clickable parts, whereby, by clicking on these, one is automatically carried to a web site, web page respectively, or to another information source which can be consulted on-line.

The fact that, according to the invention, use is made of a 'data file' and a 'presentation package', does not exclude that this file and package can be made as a single integrated part. Hence, according to a special embodiment, data of the data file, preferably all data thereof, will be integrated or thus included in the presentation package.

According to the most preferred embodiment, the presentation package and the data file together form an indivisible multimedia presentation. Thus, it is not possible to cut out or copy parts thereof.

According to another preferred characteristic, the presentation package has a layout which fills the entire screen, so that nor the desktop, nor the tool bar are visible. As a result, the screen is optimally used for the representation of the information, and moreover the user's attention is exclusively fixed on the information represented.

According to yet another preferred characteristic, the presentation package is built such that it provides for the representation of different displays containing information, in the shape of images and/or text, whereby this information contains clickable parts, whereby the presentation package makes sure, when said parts are clicked on, that one is automatically carried to another display.

The presentation package provides for a stand-alone multimedia presentation, either or not with full-motion images.

In a practical application, the method will be used to create an electronic advertising mailing for a target audience.

According to another application, it will be used to create a magazine which can be sent in an electronic way, in particular a newspaper.

Apart from the method, the invention also concerns a means for sending information according to this method. This means to this end consists of the combination of a presentation package and a data file which can be sent via e-mail as an attachment, whereby the presentation package is automatically installed when being opened, such that the data file can be consulted as a flyer containing information.

It should be noted that the data of the data file can hereby be included in the presentation package, either partly or as a whole.

It is clear that, according to the invention, a small web site is created so to say which is sent together with an e-mail as an indivisible whole, and which can then be visited by the receiver of the e-mail.

In order to better explain the characteristics of the invention, the following specific example is described as an example only without being limitative in any way, in a concise manner.

When a company sells specific technical products A, B, C and D, it can send an e-mail to a target audience, which contains an attachment made according to the invention.

The data file may hereby consist of several screen-filling images, the first of which is for example an overview of the available products, in this case A, B, C and D, whereby each represented product is accompanied by a clickable part.

By clicking on a clickable part accompanying one of the products, one automatically obtains another image containing information on the above-mentioned product. From here, one can move to other images.

Certain images may in turn contain clickable parts, so that, when clicking on them, one automatically establishes a link with an existing web site or a specific page thereof.

The invention is by no means limited to the above-described embodiment; on the contrary, such a method and means can be made in all sorts of variants while still remaining within the scope of the invention.

## Claims

1. Method for sending information via e-mail, consisting of a message and one or several attachments, whereby the attachments are subdivided such that they consist of a presentation package on the one hand and of a data file on the other hand, whereby the presentation package is automatically installed when being opened, such that the data file can be consulted as a flyer containing information.

2. Method according to claim 1, **characterised in that** the information shown in the flyer can automatically call web sites, web pages or on-line information.

3. Method according to claim 2, **characterised in that** the information contains clickable parts, whereby, by clicking on them, one is automatically carried to a web site, web page respectively, or to another information source which can be consulted on-line.

4. Method according to any of the preceding claims, **characterised in that** the data of the data file, preferably all data thereof, are integrated or thus included in the presentation package.

5. Method according to any of the preceding claims, **characterised in that** the presentation package and the data file together form an indivisible multimedia presentation.

6. Method according to any of the preceding claims, **characterised in that** the presentation package has a layout which fills the entire screen, so that nor the desktop, nor the tool bar are visible.

7. Method according to any of the preceding claims, **characterised in that** the presentation package provides for the representation of different displays containing information, in the shape of images and/or text, whereby this information contains clickable parts, whereby the presentation package makes sure, when said parts are clicked on, that one is automatically carried to another display.

8. Method according to any of the preceding claims, **characterised in that** it is used to create an electronic advertising mailing for a target audience.

9. Method according to any of the preceding claims, **characterised in that** it is used to create a magazine which can be sent in an electronic way, in particular a newspaper.

10. Means for sending information according to the method of claim 1, **characterised in that** this means consists of the combination of a presentation package and a data file which can be sent via e-mail as an attachment, whereby the presentation package is automatically installed when being opened, such that the data file can be consulted as a flyer containing information.

11. Means according to claim 10, **characterised in that** the data of the data file are included in the presentation package, either partly or as a whole.

12. Means according to claim 11 or 12, **characterised in that** the above-mentioned means is designed as a multimedia presentation.
